# EUROPÄISCHE PATENTSCHRIFT

(11) **EP 1 444 901 B1**
(45) Veröffentlichungstag und Bekanntmachung des Hinweises auf die Patenterteilung: **21.05.2008**
(21) Anmeldenummer: 04002882.1
(22) Anmeldetag: 10.02.2004
(51) Int. Cl.: A23G 1/00, A23G 1/20

(54) **Verfahren und Vorrichtung zur Herstellung schalenartiger Hohlkörper aus Süsswarenmasse**
Method and apparatus for producing shell-like hollow bodies from a confectionery mass
Procédé et dispositif pour produire des corps creux en forme de coquilles à partir d'une masse de confiserie

(30) Priorität: 10.02.2003 DE 10305299
(43) Veröffentlichungstag der Anmeldung: 11.08.2004
(73) Patentinhaber: CHOCOTECH GmbH, 38855 Wernigerode (DE)
(72) Erfinder: Hochapfel, Birk, 38855 Wernigerode (DE)
(74) Vertreter: Rehberg Hüppe + Partner

(56) Entgegenhaltungen:
- EP-A- 1 103 188
- DE-A1- 3 447 245
- DE-C1- 4 322 414
- FR-A- 2 604 651

## Beschreibung

Die Erfindung betrifft ein Verfahren und eine Vorrichtung zur Herstellung schalenartiger Hohlkörper aus Süßwarenmasse. Die Erfindung lässt sich insbesondere auf die Herstellung schalenartiger, relativ dünnwandiger Hohlkörper aus Schokolademasse anwenden, aber auch auf andere Süßwarenmassen, beispielsweise Karamellmassen, Fondantmassen, Fruchtmassen und dergleichen. Die Erfindung bezieht sich auf die Herstellung solcher schalenartiger Hohlkörper mit einer randoffen gestalteten Öffnung. Solche Hohlkörper stellen in der Regel Zwischenprodukte dar, die mit einer Füllmasse gefüllt, eventuell gedeckelt und oft auch noch überzogen werden. Auf diese Art und Weise entsteht ein verzehrfähiges Produkt, insbesondere eine Praline. Der schalenartige Hohlkörper besitzt in aller Regel einen sich im Wesentlichen bevorzugt radial erstreckenden Boden und eine sich im Wesentlichen bevorzugt vertikal erstreckende Wand. Der vertikale Wandungsteil ist oft konisch gestaltet. Unter einem solchen schalenartigen Hohlkörper werden aber auch Formkörper in beispielsweise halbkugelförmiger Schalengestalt verstanden. Die Erfindung bezieht sich auf die Herstellung solcher schalenartiger Hohlkörper in einem Tauchverfahren, wobei ein gekühlter Stempel in ein Bad flüssiger temperierter Süßwarenmasse abgesenkt und anschließend über die Oberfläche des Bades wieder angehoben wird. Auf der benetzten Oberfläche des Stempels haftet dabei eine entsprechende Menge Süßwarenmasse aus dem flüssigen Bad und gelangt zur Erstarrung, wobei sich an dem benetzten Teil des Stempels ein schalenartiger Tauchüberzug bildet. Die Masse erstarrt dabei von der Oberfläche des Stempels ausgehend radial nach außen und nach innen in die mitgenommene und haftende Süßwarenmasse hinein, wobei dieser Erstarrungsvorgang zeitabhängig abläuft, so dass sich zuletzt auf der freien Oberfläche des Tauchüberzugs noch flüssige oder zumindest teigige Süßwarenmasse befindet. Dieser Tauchüberzug wird dann von dem Stempel gelöst und als Hohlkörper abgegeben. Oft erfolgt die Abgabe auf eine Unterlage, insbesondere ein Förderband, mit dessen Hilfe die Hohlkörper einer Weiterbearbeitung oder Weiterverarbeitung, insbesondere Verpackung, zugeführt werden. Eine zur Durchführung des Verfahrens geeignete Vorrichtung besitzt zweckmäßig eine Vielzahl gekühlter Stempel, die gemeinsam in ein Bad flüssiger temperierter Süßwarenmasse eingetaucht werden. Es ist ein steuerbarer Antrieb für eine Vertikalbewegung der Stempel relativ zu dem Bad vorgesehen. Die Kühlung jedes Stempels erfolgt mit Hilfe eines von einem Kühlmedium durchflossenen Kanals, der sich entweder durch den Stempel erstreckt oder zumindest in solcher räumlicher Relativlage zu den Stempeln angeordnet ist, dass die Kühlwirkung die Stempel erreicht, damit diese möglichst konstant auf einer je nach der Art der Süßwarenmasse unterschiedlichen Temperatur gehalten werden können, die zu einer Erstarrung oder Verfestigung der Süßwarenmasse in Form des Tauchüberzugs auf dem Stempel führt.

### STAND DER TECHNIK

Aus der EP 1 103 188 B1 ist ein Tauchverfahren und eine Vorrichtung der eingangs beschriebenen Art zur Herstellung schalenartiger Hohlkörper aus Süßwarenmasse bekannt. Eine Vielzahl gekühlter Stempel werden in ein Bad flüssiger temperierter Süßwarenmasse abgesenkt und wieder angehoben. Die Stempel sind so ausgebildet, dass der an ihnen haftende Tauchüberzug der Süßwarenmasse einen sich im Wesentlichen radial bzw. horizontal erstreckenden Boden und eine sich im Wesentlichen vertikal bzw. zylindermantelförmig erstreckende Wandung bekommt. Die Wandung des Tauchüberzugs soll in axialer Richtung, also über die Höhe, eine gleichbleibende Wanddicke erhalten. Zu diesem Zweck wird jeder Stempel durch eine nach oben offene Öffnung hindurchgeführt. Überschüssige Masse wird durch Schabermittel an der Peripherie der Öffnung abgenommen. Die Schabermittel können nur zu einem Zeitpunkt eingesetzt werden, zu dem der im Bereich der Wandung abzuschabende Teil der Süßwarenmasse an der Außenseite des schalenartigen Hohlkörpers noch flüssig ist. Wenn eine teilweise Verfestigung der Süßwarenmasse bereits eingetreten ist, besteht dagegen die Gefahr, dass durch den Angriff der Schabermittel die Wandung des Tauchüberzugs eingerissen oder abgerissen wird. Die Wirkung der Schabermittel erstreckt sich nur über einen Teil der Höhe der Wandung. Im Bereich des Bodens des Tauchüberzugs findet auch eine Masseanhäufung statt. Insbesondere bei rotationssymmetrischer Gestalt des Tauchüberzugs bildet sich in der Mitte des Bodens ein Tropfen, in dessen Bereich die Verfestigung der Süßwarenmasse zuletzt eintritt. Überschüssige Masse im Bereich des Bodens soll abgeschnitten werden. Dies gilt auch für Tropfen, die nicht von selbst abfallen. Es soll in den noch flüssigen äußeren Teil des Hohlkörpers eingeschnitten werden. Ein solcher Schneidvorgang setzt voraus, dass die Süßwarenmasse in diesem Bereich erstarrt ist oder doch außen noch flüssig ist, bevor der Schneidvorgang eingeleitet werden kann. Dabei wird ein Draht, der um seine Achse auch rotierend angetrieben werden kann, durch die Masse geführt und so ein ebener Boden erzeugt. Eine Beheizung des Drahts dient der Begünstigung des Schneidvorgangs, verbunden mit einer örtlichen Erweichung oder eines Aufschmelzen der verfestigten Süßwarenmasse. Durch das Durchziehen eines Drahts durch eine noch flüssige Masse entsteht die Gefahr, dass beim Hindurchführen des Drahts durch die schneidfähige Masse der Boden des Tauchüberzugs ein- oder aufreißt, was bis zu einem Ablösen des Bodens von der weiterhin am Stempel haftenden Wandung führen kann. Dabei entsteht nicht nur Ausschuss, sondern es wird auch der kontinuierliche Herstellungsprozess unterbrochen werden müssen, um die Stempel von anhaftenden Wandungsteilen zu reinigen. Jedenfalls schränkt die erforderliche genaue Temperaturführung zur Bereitstellung eines schneidbaren Materials für den Schneidvorgang eine erhebliche zeitliche Einschränkung dar, die nicht einfach beherrschbar ist. Wenn ein beheizter Draht eingesetzt wird, besteht die Gefahr des Aufschmelzens der Süßwarenmasse verbunden mit einer nachteiligen Kristallumwandlung, z. B. bei Schokolademassen. Der Tauchüberzug wird im Bereich des Bodens unansehnlich. Auftretender Grauschleier und die übrigen Nachteile nicht richtig temperierter Schokolademasse können die Folge sein.

Ein weiteres Verfahren und eine entsprechende Vorrichtung zur Herstellung schalenartiger Hohlkörper aus Süßwarenmasse ist aus der FR 2 604 651 A1 bekannt. Die Stempel sitzen dabei auf der Unterseite eines Formblocks und werden mit einem gesteuerten Antrieb in vertikaler Richtung in ein Bad flüssiger Süßwarenmasse eingetaucht. Die Süßwarenmasse wird bei der Herstellung von Hohlkörpern aus Schokolademasse über eine Temperiermaschine unter konstanten Eigenschaften gehalten. Insbesondere muss die Temperatur der flüssigen Süßwarenmasse konstant gehalten werden. An den die Stempel haltenden Formblock, der teilweise hohl ausgebildet ist, ist eine Leitung für gekühltes Gas und eine Leitung für Druckluft angeschlossen, die wahlweise mit einem im Formblock vorgesehenen Kanal verbindbar sind. Dieser Kanal im Formblock endet in feinen Öffnungen in der Oberfläche jedes Stempels. Damit soll einerseits das Kühlen der Stempel und andererseits das Lösen der erstarrten Tauchüberzüge von den Stempeln erfolgen. Durch Vibration des Formblocks soll überschüssige Süßwarenmasse von den Stempeln entfernt werden.

Aus der PCT-Anmeldung mit der Veröffentlichungsnummer WO 98/58547 A1 ist ein ähnliches Tauchverfahren bekannt, mit dem eine Vielzahl von Stempeln, die an einem Formblock sitzen, gemeinsam in ein Schmelzbad abgesenkt und wieder angehoben werden. Auch dabei bildet sich auf der benetzten Oberfläche der Stempel je ein Tauchüberzug. Der Formblock bzw. die Stempel sind hier mit zwei voneinander getrennten Kanälen ausgebildet. Die Kühlung der Formen erfolgt durch Zirkulation eines Kühlmittels in einem ersten geschlossenen Kreislauf. Das Ablösen der Tauchüberzüge von den Stempeln erfolgt mit Hilfe eines anderen Mediums und einem davon getrennten zweiten Versorgungskreislauf. Nur dieser zweite Kreislauf besitzt in der Oberfläche des Stempels endende Öffnungen. Durch die beiden getrennten Kanäle für die Kühlung einerseits und für das Ablösen andererseits besteht die Möglichkeit, diese beiden Funktionen zeitlich unabhängig voneinander zu steuern. So kann beispielsweise die Kühlflüssigkeit kontinuierlich zirkulierend angewendet werden, während das Ablösen der Tauchüberzüge von den Stempeln taktweise erfolgt.

Solche schalenartigen Hohlkörper der hier angesprochenen Art stellen empfindliche Halb- oder auch Fertigprodukte dar, insbesondere wenn sie eine relativ dünne Wanddicke besitzen, wie es für das angesprochene Tauchverfahren typisch ist. Das Erstarren bzw. Verfestigen der an der benetzten Oberfläche der Stempel haftenden Süßwarenmasse ist ein Vorgang, der in starkem Maße von der Art der Süßwarenmasse und deren Eigenschaften, insbesondere der Temperatur der Süßwarenmasse im Tauchbad sowie der Oberflächentemperatur der Stempel, abhängig ist. Die Verfestigung verläuft zudem an verschiedenen Stellen des Tauchüberzugs in unterschiedlicher Weise. Dabei bildet sich der Rand des schalenartigen Hohlkörpers relativ dünnwandig aus. Es kommt dort zu einer beschleunigten Erstarrung, während die Süßwarenmasse beispielsweise im Bodenbereich eine vergleichsweise größere Wanddicke annimmt, deren Verfestigung einen größeren Zeitraum beansprucht. Oft bildet sich im Bereich des Bodens des Tauchüberzugs ein Tropfen, in dessen Bereich die Verfestigung der Süßwarenmasse zuletzt eintritt. Diese Tropfenbildung ist nachteilig. Sie verhindert die Ausbildung und Gestaltung eines ebenen oder glatt durchgehenden Bodens mit angenähert konstanter Wanddicke. Eine solche Gestaltung ist aber oft erforderlich, um den Hohlkörper lagestabil und lagegenau auf einer Unterlagen, beispielsweise einem Förderband, abzusetzen, auf dem die Hohlkörper der Weiterverarbeitung oder Weiterbearbeitung zugeführt werden. Oft verlangt auch die angestrebte Gestaltung des Hohlkörpers einen ebenen Boden. Auch bei der Ausbildung etwa halbkugelförmiger Hohlkörper oder solcher Hohlkörper, die neben einem etwa zylindrischen Wandungsteil einen etwa halbkugelförmigen Boden besitzen sollen, ergibt sich die Notwendigkeit, eine tropfenartige Masseanhäufung im Bereich des Bodens des verfestigten Hohlkörpers zu verhindern.

Zwar ist aus der DE 43 22 414 C1 eine Vorrichtung zum Entfernen von Überzugsmasse im hinteren Bodenbereich von Warenstücken bekannt, bei dem im Rahmen einer Überzugsmaschine im Spaltbereich zwischen zwei aneinander anschließenden Förderbändern eine rotierend angetriebene Welle Anwendung findet, um sich im Randbereich des Bodens bildende Grate oder Schwänze noch in schmelzflüssigem Zustand von dem überzogenen Warenstück abzunehmen. Die angetriebene Welle wird damit zwar auch zu einem Zeitpunkt eingesetzt, zu dem die abzunehmende Masse noch flüssig ist. Die Schwänze oder Grate werden auf der angetriebenen Welle aufgewickelt und insoweit durch einen Abreißvorgang im schmelzflüssigen Zustand von der Welle aufgewickelt und mitgenommen. Über einen angestellten Abstreifer wird die Welle wieder gesäubert. Eine nennenswerte Beeinflussung der Überzugsmasse im Bereich des Bodens des Warenstückes findet dabei jedoch nicht statt. Durch das Abnehmen von Graten und Schwänzen von noch schmelzflüssiger Masse wird die Wanddicke des Überzugs des Warenstücks im Bereich des Bodens also nicht beeinflusst. Auch erstrecken sich die abgenommenen Grate oder Schwänze von dem Rand des überzogenen Warenstückes ausgehend in horizontaler oder angenähert in horizontaler Richtung, etwa im Gegensatz zu einer Tropfenbildung bei der Herstellung eines schalenartigen Hohlkörpers im Tauchverfahren, bei der sich der Tropfen im Wesentlichen entsprechend der Schwerkraft in senkrechter Richtung zur Fläche des Bodens ausbildet.

Bei Überziehmaschinen ist es weiterhin bekannt, unterhalb des Gitterbandes eine oder mehrere Bodenabstreichwellen einzusetzen, mit denen überschüssige flüssige Masse abgenommen wird.

### AUFGABE DER ERFINDUNG

Der Erfindung liegt die Aufgabe zugrunde, ein Verfahren und eine Vorrichtung der beschriebenen Art so weiterzubilden, dass im Bereich des Bodens des Tauchüberzugs eine gleichmäßigere Wanddicke entsteht und die Nachteile, die mit einer Tropfenausbildung verbunden sind, beseitigt werden. Insbesondere kann es dabei um die Ausbildung auch eines ebenen Bodens oder Bodenbereichs des Tauchüberzugs bzw. des Hohlkörpers gehen.

### LÖSUNG

Das Verfahren der eingangs beschriebenen Art kennzeichnet sich erfindungsgemäß dadurch, dass das Entfernen noch flüssiger bis teigiger Süßwarenmasse im Bereich des Bodens des Tauchüberzugs durch einen Kontakt mit einer gleichläufig oder gegenläufig rotierend angetriebenen Welle von außen auf den Bereich des Bodens erfolgt und dabei der Boden des Tauchüberzugs unter Einwirkung von Sog- und Zugkräften eingeebnet wird.

### BESCHREIBUNG DER ERFINDUNG

Die Erfindung setzt sich damit in Gegensatz zum Stand der Technik. Es wird nicht abgewartet, bis die Süßwarenmasse im Bereich des Bodens schneidfähig geworden ist, um sodann einen Teil des Bodens durch einen Schnittvorgang zu entfernen. Es wird vielmehr erfindungsgemäß bereits wesentlich früher eingegriffen, nämlich zu einem Zeitpunkt, zu dem noch große Bereiche des Bodens auf der Außenseite des Tauchüberzugs, die bearbeitet werden sollen, noch flüssig bzw. noch teigig sind. Dies beschleunigt nicht nur die Herstellung, sondern eröffnet auch ein relativ großes Zeitfenster, in dem die gewünschte Entfernung überschüssiger Süßwarenmasse im Bereich des Bodens durchgeführt werden kann. Die Abnahme noch flüssiger oder noch zähflüssiger Süßwarenmasse ist im Gegensatz zu einem Schneidvorgang auch insoweit vorteilhaft, als bei der Abnahme Sog- und Zugkräfte in der noch flüssigen Süßwarenmasse entstehen, die zu einer Vergleichmäßigung der Wanddicke des Bodens über dessen Erstreckung führen. Dabei erfolgt gleichzeitig eine Einebnung der Oberfläche der verbleibenden Masse des Bodens. Der Boden wird damit glatt und ansehnlich. Die Wanddicke des Bodens ist in dem bearbeiteten Bereich sowie darüber hinaus in Nachbarbereichen in der gewünschten Weise gleichmäßig. Die Abnahme erfolgt durch eine Rotationsbewegung eines Werkzeugs relativ zu der zu bearbeitenden Fläche des Bodens des gebildeten Tauchüberzugs. Bei einer solchen Relativbewegung erfolgt vorteilhaft keine temperaturmäßige Schädigung der Süßwarenmasse. Im Falle des Einsatzes einer Schokoladenmasse als Süßwarenmasse wird der Temperiergrad der Masse nicht verändert. Es tritt auch keine Änderung der gebildeten Kristallmodifikationen durch die Abnahme ein. Eine unerwünschte Masseansammlung im Bereich des Bodens wird sicher und reproduzierbar vermieden.

Das Abnehmen des noch teilweise flüssigen Tauchüberzugs im Bereich des Bodens erfolgt durch eine gleichläufige oder gegenläufige Rotationsbewegung einer angetriebenen Welle, die den Bereich des Bodens des sich bildenden Hohlkörpers von außen kontaktiert. Eine gleichläufige Rotationsbewegung wird dann bevorzugt, wenn insbesondere mengenmäßig geringe Süßwarenmassenteile abgenommen und eine besonders hohe Glättwirkung erreicht werden soll. Einer gegenläufigen Rotation wird dann der Vorzug gegeben, wenn die Abnahme relativ großer Mengen insbesondere zähflüssiger Massen erforderlich ist.

Das teilweise Abnehmen des noch teilweise flüssigen Tauchüberzugs erfolgt unmittelbar nach dem Wiederanheben der Stempel aus dem Bad. Zu diesem Zeitpunkt ist im Bereich der inneren Oberfläche des Tauchüberzugs zwar bereits eine Verfestigung eingetreten. Diese Verfestigung erstreckt sich jedoch nur mit gewisser radialer Tiefe, die kleiner ist als die vorgesehene Wanddicke im Bodenbereich. Durch das Wiederanheben der Stempel in vertikaler Richtung nach oben und infolge des Schwerkrafteinflusses ergibt sich eine Masseanhäufung im Bereich des Bodens des Tauchüberzugs. In diesem Bereich tritt die Verfestigung des Tauchüberzugs außen zeitversetzt ein, beispielsweise im Vergleich zum Rand des Tauchüberzugs bzw. Hohlkörpers. Dieser Zeitverzug wird erfindungsgemäß genutzt, um im Bereich des noch flüssigen Tauchüberzugs eine Abnahme von Süßwarenmasse durchzuführen und so den Eintritt einer Schneidfähigkeit der Süßwarenmasse nicht abzuwarten.

Eine zur Durchführung des Verfahrens geeignete Vorrichtung der eingangs beschriebenen Art kennzeichnet sich erfindungsgemäß dadurch, dass eine rotierend angetriebene Welle vorgesehen ist, die die Süßwarenmasse im Bereich des Bodens des sich bildenden Tauchüberzugs von außen kontaktierend relativ zu dem Stempel beweglich geführt ist, und dass ein gegen die Welle angestellter Abstreifer zur Abnahme von Süßwarenmasse von der Oberfläche der Welle vorgesehen ist.

Die rotierend angetriebene Welle greift an der Süßwarenmasse an, solange diese noch flüssig, fließfähig oder teigig ist. Durch die Rotationsbewegung wird Süßwarenmasse auf der Außenseite des Tauchüberzugs abgenommen und auf die Oberfläche der Welle transferiert. Dabei erfolgt gleichzeitig ein Abstreichvorgang, der die Oberfläche des am Stempel verbleibenden Tauchüberzugs einebnet. Durch die Relativbewegung tritt eine vergleichmäßigende Wirkung ein, mit der nicht nur tropfen- oder leistenartige Vorsprünge beseitigt werden können, sondern auch unterschiedliche Wanddicken abgetragen und eingeebnet werden. Dies beschränkt sich nicht unbedingt nur auf den unmittelbaren Kontaktbereich der Oberfläche der rotierend angetriebenen Welle, sondern erfasst auch benachbarte Bereiche des Bodens, unter Umständen auch Bereiche bis in den Anfangsbereich einer sich vertikal nach oben ansetzenden Wandung. Dies gilt insbesondere für die Erstellung eines ebenen, sich horizontal erstreckenden Bodens. Durch die beschriebene Sog- oder Zugwirkung tritt auch eine Vergleichmäßigung der Wanddicke in an den Boden anschließenden Bereichen der zylindrischen Wandung ein. Dies ist von besonderer Bedeutung, da auf diese Art und Weise erhebliche Mengen von Süßwarenmassen abgenommen, einer Wiederverwendung zugeführt und damit der schalenartige Hohlkörper, wie gewünscht, nur aus einer geringen Menge Süßwarenmasse besteht. Damit lässt sich zugleich eine Vergleichmäßigung der Wanddicke des Tauchüberzugs zumindest im unteren Bereich einer möglicherweise zylindrischen Wandung erreichen.

Die rotierend angetriebene Welle sollte eine glatte Oberfläche aufweisen. Damit ist eine Oberfläche gemeint, innerhalb der sich bei Kontakt mit der noch flüssigen Süßwarenmasse Haftreibungskräfte ausbilden können, ohne dass dort eine fräsende, schneidende oder schabende Wirkung erreicht wird.

Vorteilhaft kann der Abstreifer in seinem Abstand zur Oberfläche der Welle gegen einen Anschlag einstellbar vorgesehen sein. Im Allgemeinen genügt es, den Abstreifer unter direktem Kontakt zu der Oberfläche der Welle an diese anzustellen, wobei der Anpressdruck beispielsweise durch eine vorspannbare Federanordnung wählbar bzw. einstellbar ist. In solchen Fällen ist es Aufgabe des Abstreifers, die Oberfläche der Welle kontinuierlich zu säubern und damit für den nächsten Arbeitsgang vorzubereiten. Es ist aber auch möglich, den Abstreifer gegen einen Anschlag relativ und damit abständig zur Oberfläche der Welle einzustellen. Auf diese Weise kann ein dünner Film Süßwarenmasse auf der Oberfläche der Welle eingestellt und bereitgehalten werden, der bei einem nachfolgenden Arbeitseinsatz, also bei der Bearbeitung des taktweise nachfolgenden Stempels, die Haftreibung zu der abzunehmenden flüssigen Süßwarenmasse des Tauchüberzugs am nächsten Stempel begünstigt. Um diesen Film dauerhaft in flüssigem Zustand aufrechtzuerhalten und eine Erstarrung auf der Oberfläche der rotierenden Welle zu vermeiden, kann die Welle temperierbar, insbesondere beheizbar, ausgebildet sein. Auch eine sonstige Einrichtung, beispielsweise eine z.B. mit Infrarotlicht wirkende Bestrahlungseinrichtung, die dem Umfang der Welle zugeordnet ist, kann hier sinnvoll zur Temperierung eingesetzt werden.

Vorteilhaft ist es, wenn die Welle einen etwa dem Durchmesser bzw. der Länge des Bodens des Tauchüberzugs entsprechenden Durchmesser aufweist. Der Durchmesser der Welle und/oder die Gestalt ist an die Erstreckung und Form des Bodens angepasst. Es versteht sich, dass die Stempel an einem Formblock auch über die Arbeitsbreite durchgehend nebeneinander vorgesehen sind. Auf diese Weise ist dann auch eine über die Arbeitsbreite durchgehende Welle vorgesehen, mit deren Hilfe gleichzeitig eine Reihe von Tauchüberzügen an Stempeln bearbeitet, kalibriert und letztlich abgenommen werden.

Zur Entfernung überschüssiger flüssiger Süßwarenmasse von der Oberfläche des Tauchüberzugs kann auch zusätzlich eine Vibrationseinrichtung vorgesehen sein. Die Vibrationseinrichtung kann sich einerseits auf die Stempel bzw. den die Stempel haltenden Formblock auswirken. Es ist aber auch möglich, die rotierend angetriebene Welle unter Vibration zu setzen bzw. eine Vibrationsbewegung der Rotation der Welle zu überlagern.

Die Welle kann je nach Viskosität der Süßwarenmasse mit etwa 100 bis 1000 Umdrehungen/min angetrieben sein, so dass sich unter Berücksichtigung des Durchmessers auf dem Umfang der Welle Oberflächengeschwindigkeiten in der Größenordnung von etwa 0,15 bis zu etwa 1,5 m/s ergeben.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch eine erste Ausführungsform der Vorrichtung.
- **Fig. 2**: zeigt schematisch eine zweite Ausführungsform der Vorrichtung.
- **Fig. 3**: zeigt eine perspektivische Darstellung am Beispiel einer dritten Ausführungsform.

### FIGURENBESCHREIBUNG

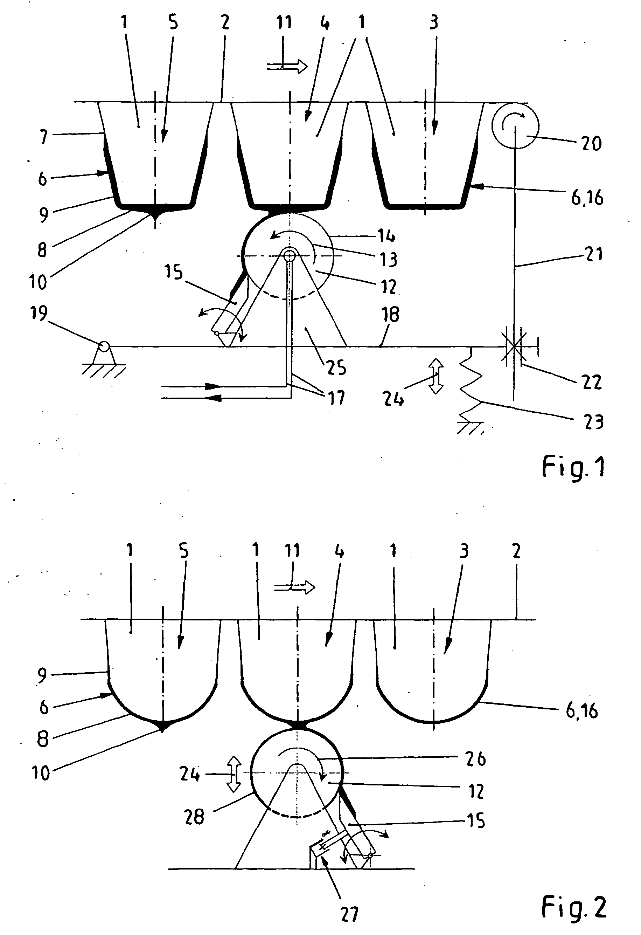

**Fig. 1** verdeutlicht schematisch eine Mehrzahl von Stempeln 1, die an einem Formblock 2 befestigt sind. Die Stempel 1 sind in Reihen 3, 4, 5 hintereinander an dem Formblock 2 vorgesehen. Jede Reihe 3, 4 und 5 weist eine Mehrzahl nebeneinander angeordneter Stempel auf. Eine solche Reihe, z. B. die Reihe 3, erstreckt sich mit ihren mehreren Stempeln 1 quer zur Arbeitsbreite der Vorrichtung und damit senkrecht zur Zeichenebene der Fig. 1.

Es versteht sich, dass ein solcher Formblock 2 beispielsweise 100 Stempel 1 aufweisen kann, die auf diese Art und Weise in einem Feld von 10x10 Stempeln vorgesehen sind. Diese Stempel 1 werden mit dem Formblock 2 und einem auf diesen einwirkenden Vertikalantrieb gesteuert in ein Bad flüssiger temperierter Süßwarenmasse abgesenkt und über die Oberfläche des Bades wieder angehoben. All diese Einzelheiten sind in den Zeichnungen nicht dargestellt, da sie aus dem Stand der Technik bekannt sind. Nach dem Wiederanheben des Formblocks bildet sich an den Stempeln 1 entsprechend der gesteuerten Eintauchtiefe der Stempel 1 in das Bad der Süßwarenmasse an jedem Stempel ein Tauchüberzug 6 aus anfänglich flüssiger Süßwarenmasse. Da die Stempel durch eine nicht näher dargestellte Kühleinrichtung gekühlt werden, erstarrt bzw. verfestigt sich der Tauchüberzug 6 an jedem Stempel 1, wobei die Verfestigung oder Erstarrung an dem offenen Rand 7 beginnt, zunächst die innere, dem Stempel 1 zugekehrte Oberfläche des Tauchüberzugs 6 erfasst und sich dann in radialer bzw. axialer Richtung in die weitere Süßwarenmasse des Tauchüberzugs 6 hinein fortsetzt. In dem in Fig. 1 dargestellten Ausführungsbeispiel sind die Stempel 1 als rotationssymmetrische Kegelstümpfe ausgebildet, so dass an jedem Tauchüberzug 6 ein Boden 8 und eine Wandung 9 unterschieden werden können. Der Boden 8 erstreckt sich im Wesentlichen horizontal und unterhalb des Stempels 1, während die Wandung 9 sich mehr in vertikaler Richtung an den Boden 8 anschließt. Bevorzugt im Mittelbereich des Bodens bildet sich nach dem Wiederanheben der Stempel aus dem Bad flüssiger temperierter Süßwarenmasse ein Tropfen 10, der an dem in Fig. 1 links dargestellten Tauchüberzug 6 schematisch verdeutlicht ist. In der Praxis ist die Wanddicke des Tauchüberzugs 6 nicht so gleichmäßig, wie dies aus den Zeichnungen hervorgeht. Da der Erstarrungs- bzw. Verfestigungsvorgang über eine gewisse Zeitspanne abläuft, während der auch die Schwerkraft auf die Süßwarenmasse des Tauchüberzugs 6 einwirkt, findet eine Masseanhäufung während des Erstarrungs- bzw. Verfestigungsvorgangs in Wirkrichtung der Schwerkraft statt. Die Wanddicke der Wandung 9 wird im unteren Bereich, also dem Boden 8 zugekehrt, größer sein als im oberen Bereich, insbesondere im Bereich des Randes 7.

Auch die Wanddicke des Bodens 8 ist in radialer Richtung nicht gleichmäßig, wobei sich auch andere Masseanhäufungen ergeben können, als dies durch den Tropfen 10 schematisch wiedergegeben ist.

Während die Süßwarenmasse des Tauchüberzugs 6 entlang der inneren Kontaktfläche zu dem Stempel 1 erstarrt ist und der Tauchüberzug 6 außen noch flüssig, zumindest teigig oder noch zähflüssig ist, wird der Formblock 2 mit den daran hängenden Stempeln 1 gemäß Pfeil 11 horizontal bewegt und gelangt damit in einen Teil der Vorrichtung, wie er in Fig. 1 schematisch dargestellt ist. Es geht dabei darum, einen Teil der noch flüssigen Süßwarenmasse im Bereich des Bodens 8 des gebildeten Tauchüberzugs 6 abzunehmen und dabei den Boden 8 einzuebnen. Hierzu wird eine Welle 12 eingesetzt, die gemäß Pfeil 13 gegenläufig zur Bewegungsrichtung des Formblocks 2 mit den Stempeln 1 gemäß Pfeil 11 angetrieben ist. Die Welle 12 besitzt eine glatte Oberfläche 14 und erstreckt sich mit zylindrischer Gestalt über die Arbeitsbreite, also über die jeweilige Reihe von Stempeln 1 hinweg. Der Welle 12 ist ein Abstreifer 15 zugeordnet, der gegen die Oberfläche 14 der Welle 12 angestellt ist. Auf diese Weise wird vom Boden 8 überschüssige flüssige, zumindest zähflüssige Süßwarenmasse durch Haftreibung von der Oberfläche 14 der Welle 12 aufgenommen und vom Boden 8 abgenommen. Insbesondere erfolgt eine Abnahme des Tropfens 10. Dabei wird die flüssige Süßwarenmasse im Bereich des Bodens 8 eingeebnet und geglättet, so dass sie mit dieser Gestalt nachfolgend erstarren kann, wie dies der Tauchüberzug 6 an dem Stempel 1 der Reihe 3 in Fig. 1 erkennen lässt. Es versteht sich, dass der Tauchüberzug 6 von dem Stempel 1 nachfolgend (nicht dargestellt) gelöst wird. Zu diesem Zeitpunkt entsteht aus dem Tauchüberzug 6 der schalenartige Hohlkörper 16 mit übereinstimmender Gestalt.

Fig. 1 lässt weiterhin erkennen, dass die Welle 12 über einen Temperierkreislauf 17 temperierbar ist. Auf diese Weise kann auf der Oberfläche 14 der Welle 12 eine Temperatur eingestellt werden, wie sie für das Abnehmen überschüssiger Süßwarenmasse sinnvoll ist. Auf diese Weise kann eine Erstarrung überschüssiger Süßwarenmasse auf der Oberfläche 14 der Welle 12 verhindert werden, so dass der Abstreifer 15 voll wirksam wird und die auch in diesem Bereich noch zähflüssige Masse von der Oberfläche 14 der Welle 12 abnimmt. Diese überschüssige Süßwarenmasse wird in den Kreislauf zurückgeführt. Bei Verwendung von Schokolademasse als Süßwarenmasse kann dies über einen Dekristallisator im Rücklauf zu einer Temperiermaschine erfolgen.

Fig. 1 lässt weiterhin erkennen, dass die relative Höhe der Welle 12 gegenüber den Stempeln 1 und insbesondere dem Boden 8 des Tauchüberzugs 6 einstellbar ist. Die Welle 12 kann auf einem Hebel 18 gelagert sein, der in einem Lager 19 schwenkbar aufgenommen ist. Auf dem Hebel 18 ist die Welle 12 wie auch der Abstreifer 15 gelagert. Dem Hebel 18 ist eine Tastrolle 20 zugeordnet, die mit dem Formblock 2 zusammenwirkt. Über eine Anlenkstange 21 und eine Stelleinrichtung 22, beispielsweise in Form einer verdrehbaren Stellspindel, besteht Verbindung zu dem Hebel 18. An dem Hebel 18 greift weiterhin eine Feder 23 an, die hier als Druckfeder ausgebildet ist. Durch die Kraft der Feder 23 wird die Rolle 12 auf der eingestellten Relativlage gemäß Pfeil 24 gehalten, solange die Tastrolle 20 an dem Formblock 2 anliegt und damit Stempel 1 abgestrichen werden. Auf diese Weise wird verhindert, dass die Welle 12 gegen die Stempel 1 anläuft. Zur Unterstützung der Abnahmewirkung auf die überschüssige Süßwarenmasse im Bereich des Bodens 8 durch Haftreibung der Oberfläche 14 der Welle 12 kann eine auf die Welle 12 einwirkende Vibrationseinrichtung 25 vorgesehen sein. Alternativ kann die Vibrationseinrichtung auch auf den Formblock 2 und damit die Stempel 1 einwirkend vorgesehen sein.

Durch den Kontakt der Oberfläche 14 der Welle 12 mit dem noch flüssigen Teil der Süßwarenmasse im Bereich des Bodens 8 des Tauchüberzugs 6 entsteht eine Sog- oder Zugwirkung auf die Süßwarenmasse, durch deren Einfluss nicht nur flüssige Süßwarenmasse im Bereich des Bodens, sondern auch noch im Übergangsbereich zu der Wandung 9 des Tauchüberzugs abgenommen wird. Da in diesem Bereich oft auch Masseanhäufungen auftreten, erstreckt sich die vergleichmäßigende Wirkung der Abnahme von überschüssiger Süßwarenmasse im Bereich des Bodens nicht nur auf den Boden selbst, sondern auch bis zu gewisser Höhe in den Bereich der Wandung 9 hinein. Die beabsichtigte Wirkung kann durch Einstellung des Abstands der Welle 12 gegenüber den Stempeln 1 mit Hilfe der Stelleinrichtung 22 feinfühlig eingestellt und begrenzt werden. Ebenso ist es möglich, den Abstand groß einzustellen und damit eine Abnahmewirkung überschüssiger Süßwarenmasse nur in einem Bereich des Bodens 8 des Tauchüberzugs 6 zu erzielen. Dies richtet sich im Einzelnen nach der gewünschten Gestalt des Tauchüberzugs 6 bzw. des Hohlkörpers 16.

Fig. 1 verdeutlicht die Anwendung der Erfindung an Tauchüberzügen 6, die einen sich eben erstreckenden Boden 8 aufweisen. **Fig. 2** verdeutlicht, dass die Erfindung auch dann anwendbar ist, wenn der Tauchüberzug einen Boden 8 in Form eines Kugelabschnitts, beispielsweise einer Halbkugel, aufweist. Hier wird sich der Tropfen 10 an der tiefsten Stelle des Bodens 8 einstellen. Für viele Anwendungsfälle genügt es, überschüssige Süßwarenmasse nur im Bereich des Tropfens 10 oder mit geringer Erstreckung darüber hinaus abzunehmen. In diesem Falle ist es sinnvoll, die Welle 12 in Richtung des Pfeils 26, also gleichläufig zur Förderrichtung des Formblocks 2 gemäß Pfeil 11 anzutreiben. Obwohl die Wellen 12 gemäß den Ausführungsbeispielen der Fig. 1 und 2 in ihrem Durchmesser übereinstimmend bemessen sind, sei darauf hingewiesen, dass der Durchmesser der Welle 12 an die Form und Größe der Stempel 1 angepasst werden kann, um unterschiedliche Spaltwirkungen zwischen der Oberfläche 14 der Welle 12 und dem Boden 8 des Tauchüberzugs 6 bei der Abnahme überschüssiger Süßwarenmasse zu erzielen. Das Größenverhältnis richtet sich auch danach, ob ein kleiner Bereich des Bodens 8 oder ein großer Bereich des Bodens 8 des Tauchüberzugs bearbeitet werden soll.

Fig. 2 verdeutlicht eine weitere Einzelheit, die auch bei der Ausführungsform der Fig. 1 anwendbar ist. Es ist hier ein Anschlag 27 vorgesehen, gegen den der Abstreifer 15 anliegend eingestellt werden kann. Damit liegt die Spitze des Abstreifers 15 nicht unmittelbar auf der Oberfläche 14 der Welle 12 an, sondern hinterlässt einen dünnen Film 28 flüssiger Süßwarenmasse auf der Oberfläche 14 der Welle 12. Ein solcher Film kann bei bestimmten Massen die entstehende Haftreibung, die für die Abnahme überschüssiger Süßwarenmasse von dem Boden 8 ursächlich ist, verbessern. Die Dicke des verbleibenden Films 28 ist über den einstellbaren Anschlag 27 wählbar. In Verbindung mit der Ausbildung eines solchen Films 28 kann es sinnvoll sein, den Temperierkreislauf 17, der in Fig. 1 dargestellt ist, einzusetzen, beispielsweise um eine Erstarrung der Süßwarenmasse im Bereich des Films 28 zu verhindern. Es versteht sich, dass am Abstreifer 15 auch bei dem Ausführungsbeispiel der Fig. 2 überschüssige Süßwarenmasse abgenommen wird, die in den Kreislauf zurückgefördert und damit einer Wiederverwendung zugänglich gemacht wird.

Gemäß Fig. 2 ist vorstellbar, dass die dort eingesetzte Welle 12 zylindrische, über die Arbeitsbreite durchgehende Gestalt aufweist. Die Oberfläche 14 ist auch hier glatt ausgebildet. Es ist nur eine Mitnahme flüssiger Süßwarenmasse aufgrund von Haftreibung beabsichtigt. Abgesehen von Oberflächenrauhigkeiten in diesem Bereich besitzt die Oberfläche 14 der Welle 12 keine ausgeprägten Vorsprünge oder Werkzeuge, wie sie beispielsweise bei Fräsern angewendet werden. Es ist wichtig zu erkennen, dass hier eine Abnahme überschüssiger Süßwarenmasse im Bereich des Bodens 8 des Tauchüberzugs 6 erfolgt, solange die Süßwarenmasse noch flüssig bzw. mindestens zähflüssig ist. Eine Abnahme überschüssiger Masse durch Schneiden oder Fräsen kann im Gegensatz dazu nur dann erfolgen, wenn vorher eine Erstarrung bzw. Verfestigung der Süßwarenmasse stattgefunden hat.

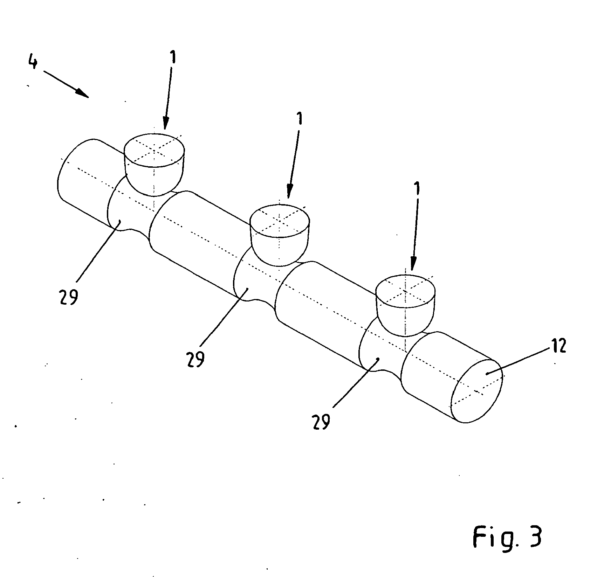

**Fig. 3** verdeutlicht anhand einer perspektivischen Darstellung, die nur einen Teil der Welle 12 sowie drei Stempel 1 der Reihe 4 verdeutlicht, dass die Welle 12 über die Arbeitsbreite auch profiliert ausgebildet sein kann. Die Welle 12 weist in Zuordnung zu den Stempeln 1 sattelförmige Vertiefungen 29 bzw. Einschnürungen auf, deren Gestalt im Querschnitt an die Gestalt der Stempel im Bereich des sich bildenden Bodens 8 des Tauchüberzugs 6 (nicht dargestellt) angepasst ist. In Fig. 3 sind Stempel 1 dargestellt, die im Bereich des Bodens des sich bildenden Tauchüberzugs kugelkappenförmig ausgebildet sind. An solchen Stempeln entstehen Tauchüberzüge 6, die zu rotationssymmetrischen Hohlkörpern 16 führen. Eine solche Gestaltung der Hohlkörper 16 mit einer durch Abnahme überschüssiger Süßwarenmasse vergleichmäßigten Wanddicke ist besonders problematisch. Hier wirken sich die schon beschriebenen Sog- oder Zugkräfte in der noch flüssigen Süßwarenmasse während der Abnahme in besonderer Weise aus. Es tritt auch eine Vergleichmäßigung in Nachbarbereichen an Stellen des Tauchüberzugs ein, bei denen die sattelförmige Vertiefung 29 einen größeren Abstand davon aufweist, also insbesondere in Bereichen des Tauchüberzugs 6 an den Stempeln 1, die in Richtung des Pfeils 11 (Fig. 1 und 2) vorne oder hinten an den Stempeln 1 liegen. Wellen 12 mit sattelförmigen Vertiefungen 19 können aber auch dann eingesetzt werden, wenn beispielsweise Tauchüberzüge 6 und Hohlkörper 16 erzeugt werden sollen, die im Horizontalschnitt rechteckige Gestalt besitzen und bei denen der Boden 8 etwa tonnenartig gewölbt ausgebildet ist.

### BEZUGSZEICHENLISTE

- 1: Stempel
- 2: Formblock
- 3: Reihe
- 4: Reihe
- 5: Reihe
- 6: Tauchüberzug
- 7: Rand
- 8: Boden
- 9: Wandung
- 10: Tropfen

- 11: Pfeil
- 12: Welle
- 13: Pfeil
- 14: Oberfläche
- 15: Abstreifer
- 16: Hohlkörper
- 17: Temperierkreislauf
- 18: Hebel
- 19: Lager
- 20: Tastrolle

- 21: Anlenkstange
- 22: Stelleinrichtung
- 23: Feder
- 24: Pfeil
- 25: Vibrationseinrichtung
- 26: Pfeil
- 27: Anschlag
- 28: Film
- 29: Vertiefung

## Patentansprüche

1. Verfahren zur Herstellung schalenartiger Hohlkörper (16) aus Süßwarenmasse, insbesondere Schokolademasse, im Tauchverfahren, indem eine Vielzahl gekühlter Stempel (1) in ein Bad flüssiger temperierter Süßwarenmasse abgesenkt und über die Oberfläche des Bades wieder angehoben wird, die an der benetzten Oberfläche jedes Stempels (1) haftende Süßwarenmasse zu einem schalenartigen Tauchüberzug (6) mit einem Boden (8) und einer Wandung (9) verfestigt wird, dabei ein Teil der noch flüssigen bis teigigen Süßwarenmasse von dem Tauchüberzug (6) entfernt und der verbleibende Tauchüberzug (6) vollständig verfestigt, von dem Stempel (1) gelöst und als Hohlkörper (16) abgegeben wird, **dadurch gekennzeichnet, dass** das Entfernen noch flüssiger bis teigiger Süßwarenmasse im Bereich des Bodens (8) des Tauchüberzugs (6) durch einen Kontakt mit einer gleichläufig oder gegenläufig rotierend angetriebenen Welle von außen auf den Bereich des Bodens (8) erfolgt und dabei der Boden (8) des Tauchüberzugs (6) unter Einwirkung von Sog- und Zugkräften eingeebnet wird.

2. Verfahren nach Anspruch 1, **dadurch gekennzeichnet, dass** das teilweise Abnehmen des noch teilweise flüssigen Tauchüberzug (6) im Bereich des Bodens (8) unmittelbar nach dem Wiederanheben der Stempel (1) aus dem Bad erfolgt.

3. Vorrichtung zur Herstellung schalenartiger Hohlkörper (16) aus Süßwarenmasse, insbesondere Schokolademasse, mit einer Vielzahl gekühlter Stempel (1), einem Bad flüssiger temperierter Süßwarenmasse, einem steuerbaren Antrieb für eine Vertikalbewegung der Stempel (1) relativ zu dem Bad flüssiger temperierter Süßwarenmasse, und einem von einem Kühlmedium durchflossenen Kanal für die Kühlung der Stempel (1), insbesondere nach einem der Ansprüche 1 oder 2, **dadurch gekennzeichnet, dass** eine rotierend angetriebene Welle (12) vorgesehen ist, die die Süßwarenmasse im Bereich des Bodens (8) des sich bildenden Tauchüberzugs (6) von außen kontaktierend relativ zu dem Stempel (1) beweglich geführt ist, und dass ein gegen die Welle (12) angestellter Abstreifer (15) zur Abnahme von Süßwarenmasse von der Oberfläche (14) der Welle (12) vorgesehen ist.

4. Vorrichtung nach Anspruch 3, **dadurch gekennzeichnet, dass** die rotierend angetriebene Welle (12) eine glatte Oberfläche (14) aufweist.

5. Vorrichtung nach mindestens einem der Ansprüche 3 oder 4, **dadurch gekennzeichnet, dass** der Abstreifer (15) in seinem Abstand zur Oberfläche (14) der Welle (12) gegen einen Anschlag (27) einstellbar ist.

6. Vorrichtung nach mindestens einem der Ansprüche 3 bis 5, **dadurch gekennzeichnet, dass** die Welle (12) temperierbar, insbesondere beheizbar, ausgebildet ist.

7. Vorrichtung nach mindestens einem der Ansprüche 3 bis 6, **dadurch gekennzeichnet, dass** die Welle (12) einen etwa dem Durchmesser bzw. der Länge des Bodens (8) des Tauchüberzugs (6) entsprechenden Durchmesser aufweist.

8. Vorrichtung nach mindestens einem der Ansprüche 3 bis 7, **dadurch gekennzeichnet, dass** zur Entfernung überschüssiger flüssiger Süßwarenmasse von der Oberfläche des Tauchüberzugs (6) zusätzlich eine Vibrationseinrichtung (25) vorgesehen ist.

9. Vorrichtung nach mindestens einem der Ansprüche 3 bis 6 und 8, **dadurch gekennzeichnet, dass** die Welle (12) je nach Viskosität der Süßwarenmasse mit etwa 100 bis 1000 Umdrehungen/min angetrieben ist.

## Claims

1. A method for producing shell-like hollow bodies (16) from a confectionery mass, especially chocolate mass, by immersing, by moving down a plurality of cooled male dies (1) in a bath of liquid tempered confectionery mass and moving up the dies above the surface of the bath, solidifying the confectionery mass adhering to the surface of each male die (1) to form a shell-like dip coating (6) including a bottom (8) and a wall (9), doing this a part of the confectionery mass being still liquid to pasty being removed from dip coating (6), and the remaining part of the confectionery mass being completely solidified, detached from the male die (1) and delivered as the hollow body (16), **characterized in that** the removing of the confectionery mass being still liquid to pasty near the bottom (8) of the dip coating (6) takes place by contact with a shaft driven to rotate or counterrotate and contacting the bottom (8) from outside and thereby smoothens the bottom (8) of the dip coating (6) under the influence of suction and pull forces.

2. The method of claim 1, **characterized in that** the partly removing of the still liquid to pasty dip coating (6) near the bottom (8) takes place immediately after the moving up of the male dies (1) out of the bath.

3. An apparatus for producing shell-like hollow bodies (16) from a confectionery mass, especially chocolate mass, comprising a plurality of cooled male dies (1), a bath of liquid tempered confectionery mass, a controllable drive for a vertical movement of the male dies (1) with respect to the bath of liquid tempered confectionery mass, and a channel for cooling the male dies (1), the channel being passed by a cooling medium, especially of one of the claims 1 or 2, **characterized in that** a shaft (12) being driven in rotation is arranged, the shaft being movably guided near the bottom (8) of the dip coating (6) with respect to the male die (1) to contact the dip coating from the outside, and **in that** a scraper (15) is arranged with respect to the shaft (12) to remove the confectionery mass from the surface (14) of the shaft (12).

4. The apparatus of claim 3, **characterized in that** the shaft (12) being driven in rotation comprises a smooth surface (14).

5. The apparatus of at least one of the claims 3 or 4, **characterized in that** the distance of the scraper (15) to the surface (14) of the shaft (12) is adjustably positioned against a stop (27).

6. The apparatus of at least one of the claims 3 to 5, **characterized in that** the shaft (12) is designed and arranged to be tempered, especially to be heated.

7. The apparatus of at least one of the claims 3 to 6, **characterized in that** the shaft (12) is designed and arranged to have a diameter corresponding about to the diameter or the length of the bottom (8) of the dip coating (6) respectively.

8. The apparatus of at least one of the claims 3 to 7, **characterized in that** in addition a vibration unit (25) is arranged to remove surplus liquid confectionery mass from the surface of the dip coating (6).

9. The apparatus of at least one of the claims 3 to 6 and 8, **characterized in that** the shaft (12) is driven in about 100 to 1000 revolutions/min with respect to the viscosity of the confectionery mass.

## Revendications

1. Procédé de réalisation de corps creux (16) en forme de coques dans une matière de confiserie, en particulier en chocolat, par le procédé de trempage, dans lequel une pluralité de poinçons (1) refroidis sont abaissés dans un bain de matière de confiserie liquide tempérée et sont à nouveau relevés au-dessus du bain, la matière de confiserie qui adhère à la surface mouillée de chaque poinçon (1) est solidifiée pour obtenir une pellicule de matière (6) en forme de coque avec un fond (8) et une paroi (9), à cette occasion, une partie de la matière de confiserie encore liquide ou pâteuse est retirée de la pellicule de matière (6) et la pellicule de matière (6) restante est entièrement solidifiée, est détachée du poinçon (1) et est évacuée sous forme de corps creux (16), **caractérisé en ce que** l'élimination de la matière de confiserie encore liquide ou pâteuse dans la zone du fond (8) de la pellicule de matière (6) est effectuée par un contact avec un arbre, entraîné en rotation dans le même sens ou dans le sens opposé, de l'extérieur sur la zone du fond (8) et, dans ce cas, le fond (8) de la pellicule de matière (6) est aplani sous l'action de forces d'aspiration et de traction.

2. Procédé selon la revendication 1, **caractérisé en ce que** l'élimination partielle de la pellicule de matière (6) encore partiellement liquide dans la zone du fond (8) est effectuée immédiatement après le relevage des poinçons (1).

3. Dispositif de réalisation de corps creux (16) en forme de coques dans une matière de confiserie, en particulier en chocolat, comportant une pluralité de poinçons (1) refroidis, un bain de matière de confiserie liquide tempérée, un système d'entraînement pouvant être commandé pour un mouvement vertical des poinçons (1) par rapport au bain de matière de confiserie liquide tempérée, et un conduit dans lequel circule un fluide de refroidissement pour le refroidissement des poinçons (1), en particulier selon la revendication 1 ou 2, **caractérisé en ce qu'**il est prévu un arbre (12) entraîné en rotation, qui est mobile par rapport au poinçon (1) en vue d'entrer en contact de l'extérieur avec la matière de confiserie dans la zone du fond (8) de la pellicule de matière (6) se formant, et **en ce qu'**un racleur (15), en appui contre l'arbre (12), est prévu pour éliminer la matière de confiserie de la surface (14) de l'arbre (12).

4. Dispositif selon la revendication 3, **caractérisé en ce que** l'arbre (12) entraîné en rotation a une surface (14) lisse.

5. Dispositif selon au moins une des revendications 3 ou 4, **caractérisé en ce que** le racleur (15) peut être réglé dans sa distance par rapport à la surface (14) de l'arbre (12), contre une butée (27).

6. Dispositif selon au moins l'une des revendications 3 à 5, **caractérisé en ce que** l'arbre (12) est réalisé de manière à pouvoir être tempéré, en particulier chauffé.

7. Dispositif selon au moins l'une des revendications 3 à 6, **caractérisé en ce que** l'arbre (12) a un diamètre qui correspond à peu près au diamètre ou à la longueur du fond (8) de la pellicule de matière (6).

8. Dispositif selon au moins l'une des revendications 3 à 7, **caractérisé en ce qu'**il est prévu en plus un dispositif de vibration (25) pour éliminer la matière de confiserie liquide excédentaire de la surface de la pellicule de matière (6).

9. Dispositif selon au moins l'une des revendications 3 à 6 et 8, **caractérisé en ce que**, en fonction de la viscosité de la matière de confiserie, l'arbre (12) peut être entraîné avec environ 100 à 1 000 tours/min.
